# EUROPEAN PATENT APPLICATION

(11) **EP 4 722 803 A1**
(43) Date of publication of application: **08.04.2026**
(21) Application number: 25202553.1
(22) Date of filing: 16.09.2025
(51) Int. Cl.: G03B 17/08, H04N 23/50, H04N 23/57, B08B 3/02, G02B 27/00, G08G 1/017, G08G 1/04, B08B 17/02, B05B 1/26, B05B 9/04, G03B 17/02, H04N 23/51, B08B 17/06, G08G 1/00, H04N 23/52

(54) **GROUND EMBEDDED IMAGING DEVICE**

(30) Priority: 20.09.2024 TW 113135752; 03.02.2025 TW 114103859
(71) Applicant: Liu, Che-An, Taichung City 40848 (TW)
(72) Inventor: Liu, Che-An, Taichung City 40848 (TW)
(74) Representative: Germain Maureau

(57) **Abstract**

A ground embedded imaging device includes a barrel housing unit (200), an electronic element unit (6) and an automatic draining unit (7). The barrel housing unit (200) has a water collecting chamber (241, 20), a translucent window portion (245, 342) at an upper end of the barrel housing unit, a water conducting hole (443, 412) to conduct water from outside to the water collecting chamber, and a water deflecting recess portion (444, 411) in spatial communication with the water conducting hole and disposed below the ground surface. The electronic element unit (6) includes an imaging module (8) oriented toward the window portion (245, 342). The automatic draining unit (7) includes a water expelling driver (71) which is actuated to expel water from the water collecting chamber (241, 20). Water is prevented from accumulating around the window portion so that the imaging module operates correctly.

## Description

The disclosure relates to an imaging device, and more particularly to a ground embedded imaging device with automatic drainage adapted to be embedded in the ground.

Referring to FIG. 1, a conventional ground embedded electronic device with a drainage function disclosed in CN113256994B includes a housing unit 11, a video imaging module 12 and a lid 13. The housing unit 11 includes a barrel 111 and an inner cylinder 112 received in the barrel 111. The barrel 111 has a drainage pipe 113 extending downwardly from a bottom portion of the barrel 111. The video imaging module 12 is mounted at an upper end of the inner cylinder 112, and has a lens 121 for capturing license plates of vehicles travelling over the ground. The lid 13 is mounted on a top end of the housing unit 11 to shield and conceal the video imaging module 12.

Water flowing into the barrel 11 may be discharged downwardly to a drainage ditch through the drainage pipe 113, which prevents image distortion due to moisture captured by the lens 121. However, since many roads do not have drainage ditches, water flowing in the barrel 11 may not be discharged smoothly and effectively, thereby adversely affecting the recording function of the lens 121.

Therefore, an object of the disclosure is to provide a ground embedded imaging device that can alleviate at least one of the drawbacks of the prior art.

According to the disclosure, the ground embedded imaging device includes a barrel housing unit, an electronic element unit and an automatic draining unit. The barrel housing unit extends in an up-down direction, and has a water collecting chamber, a translucent window portion disposed at an upper end of the barrel housing unit, a water conducting hole formed upwardly of the water collecting chamber to conduct water from outside to the water collecting chamber, and a water deflecting recess portion in spatial communication with the water conducting hole and disposed below a ground. The electronic element unit is mounted on the housing barrel unit, and includes an imaging module which is oriented toward the window portion. The automatic draining unit is mounted on the housing barrel unit, and includes a water expelling driver which is driven by electric power and is actuated to expel water from the water collecting chamber.

With the water deflecting recess portion in spatial communication with the water conducting hole and disposed below the ground, water on the ground is guided and smoothly flows into the water collecting chamber. With the water expelling driver automatically actuated to expel the water from the water collecting chamber, water is prevented from accumulating around the window portion so that the imaging module may operate correctly (e.g., to capture or project images correctly).

Other features and advantages of the disclosure will become apparent in the following detailed description of the embodiments with reference to the accompanying drawings. It is noted that various features may not be drawn to scale.

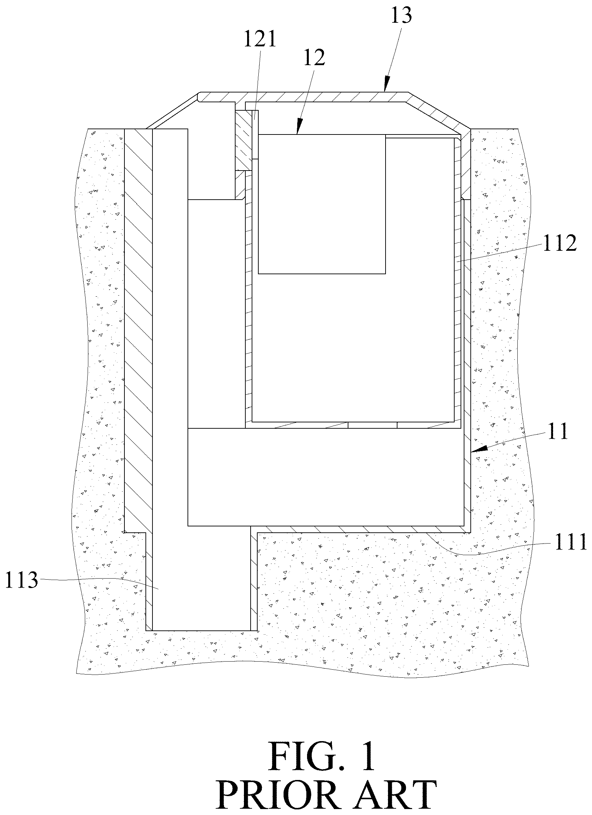

FIG. 1 is a fragmentary, partly sectional view of a conventional ground embedded electronic device disclosed in CN113256994B.
FIG. 2 is a perspective view illustrating an embodiment of a ground embedded imaging device according to the disclosure.
FIG. 3 is an exploded perspective view of the embodiment.
FIG. 4 is a perspective view illustrating a water collecting box, a water ejecting assembly and an electronic element unit of the embodiment.
FIG. 5 is a partly-sectioned perspective view illustrating the embodiment in which an electric power unit is mounted in a barrel housing unit.
FIG. 6 is a fragmentary sectional view illustrating the embodiment embedded under the ground and a water expelling course.
FIG. 7 is a fragmentary perspective view illustrating the water ejecting assembly and a lid assembly of the embodiment.
FIG. 8 is a schematic perspective view illustrating the lid assembly being lifted and the water collecting box being removed from the barrel housing unit.
FIG. 9 is a schematic perspective view illustrating the electronic element unit being removed from the barrel housing unit for replacement of the electric power unit.
FIG. 10 is a perspective view illustrating another embodiment of the ground embedded imaging device according to the disclosure.
FIG. 11 is an exploded perspective view of the embodiment.
FIG. 12 is a perspective view illustrating an inner cylinder and a control board mounted in the inner cylinder of the embodiment.
FIG. 13 is an exploded perspective view illustrating a portion of the embodiment.
FIG. 14 is an exploded perspective view similar to FIG. 13, taken from another angle.
FIG. 15 is a partly sectional perspective view illustrating the embodiment.
FIG. 16 is a fragmentary sectional view illustrating the embodiment embedded under the ground.
FIG. 17 is a sectional view taken along line XVII-XVII of FIG. 10.
FIG. 18 is a perspective view of a portion of the embodiment, taken from another angle.
FIG. 19 is a sectional view taken along line XIX-XIX of FIG. 16.

Before the disclosure is described in greater detail, it should be noted that where considered appropriate, reference numerals or terminal portions of reference numerals have been repeated among the figures to indicate corresponding or analogous elements, which may optionally have similar characteristics.

It should be noted herein that for clarity of description, spatially relative terms such as "top," "bottom," "upper," "lower," "on," "above," "over," "downwardly," "upwardly" and the like may be used throughout the disclosure while making reference to the features as illustrated in the drawings. The features may be oriented differently (e.g., rotated 90 degrees or at other orientations) and the spatially relative terms used herein may be interpreted accordingly.

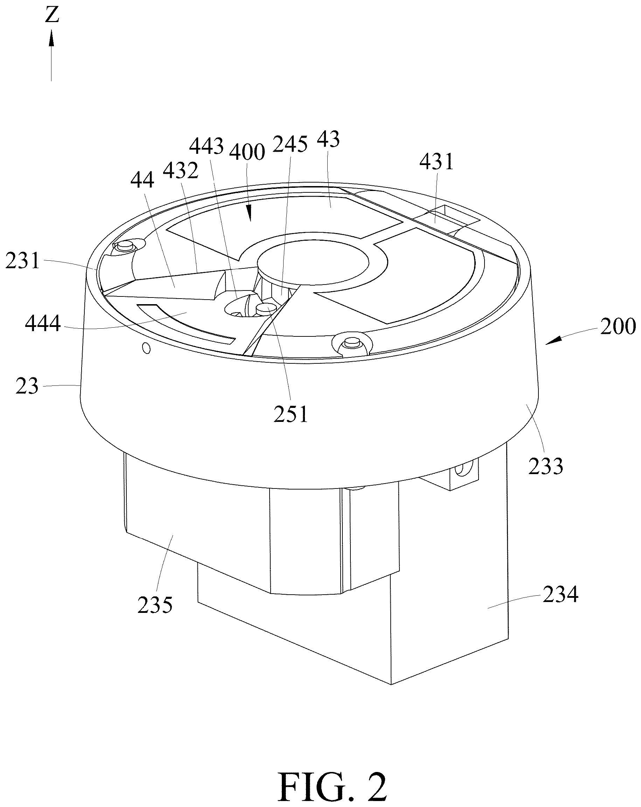

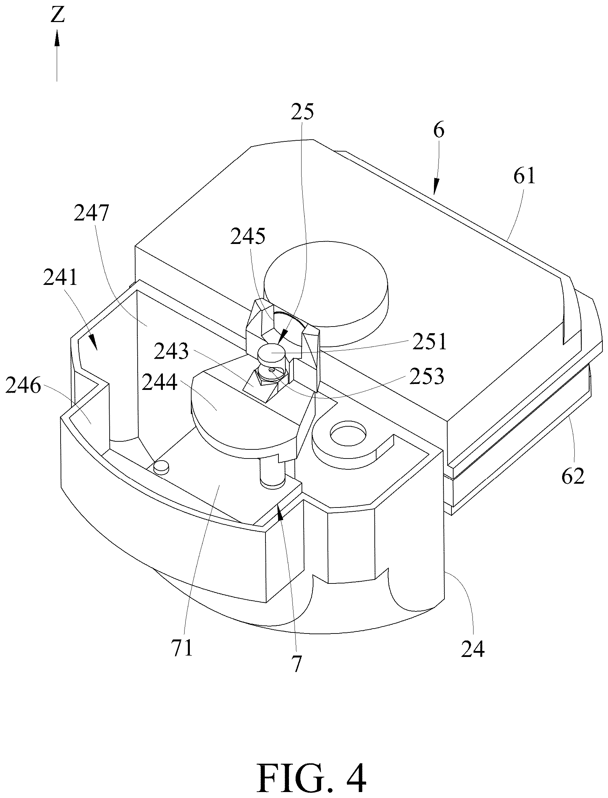

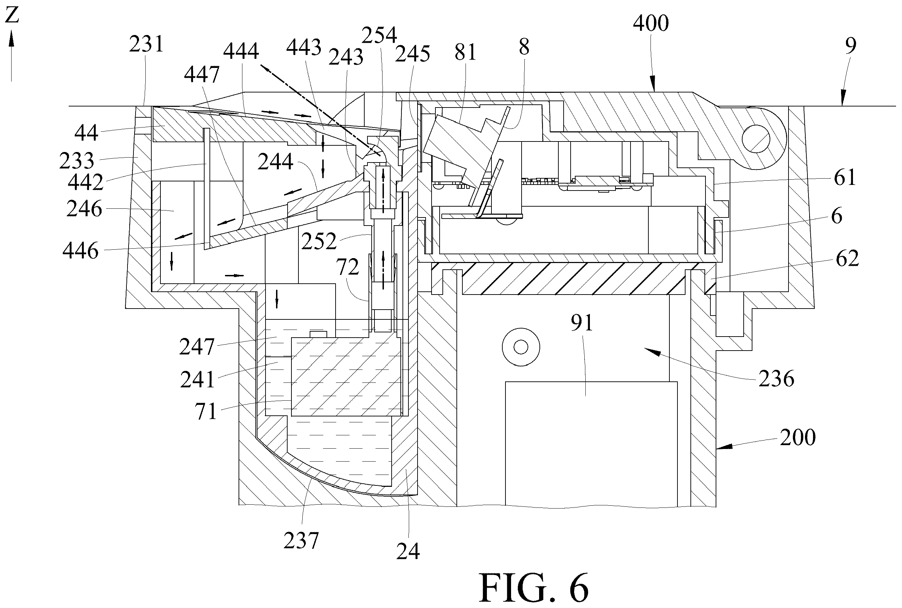

Referring to FIGS. 2 to 4, an embodiment of a ground embedded imaging device according to the disclosure is adapted to be embedded in the ground 9 (see FIG. 6) for capturing license plates of vehicles travelling over the ground 9. The ground embedded imaging device of the embodiment is adapted for an electric power unit 91 (see FIG. 6) to be mounted thereon and electrically connected therewith, such as a battery. In some embodiments, the imaging device may be electrically connected with an external electric power unit. The ground embedded imaging device of the embodiment includes a barrel housing unit 200, an electronic element unit 6 and an automatic draining unit 7.

With reference to FIGS. 2, 3 and 5, the barrel housing unit 200 includes a barrel 23, a water collecting box 24, a lid assembly 400 and a water ejecting assembly 7. The barrel 23 extends in an up-down direction (Z) and has an upper open end 231 and a lower closed end 232. In this embodiment, the barrel 23 has a circular surrounding portion 233 with the upper open end 231, a first cylinder portion 234 extending downwardly from the circular surrounding portion 233, and a second cylinder portion 235 extending downwardly from the circular surrounding portion 233 and adjacent to the first cylinder portion 234. The length of the first cylinder portion 234 in the up-down direction (Z) is greater than that of the second cylinder portion 235. The first cylinder portion 234 is formed with a power accommodation chamber 236 opened upwardly for accommodating the electric power unit 91. The second cylinder portion 235 is formed with a box accommodation chamber 237 opened upwardly. The bottom portions of the first and second cylinder portions 234, 235 define the lower closed end 232.

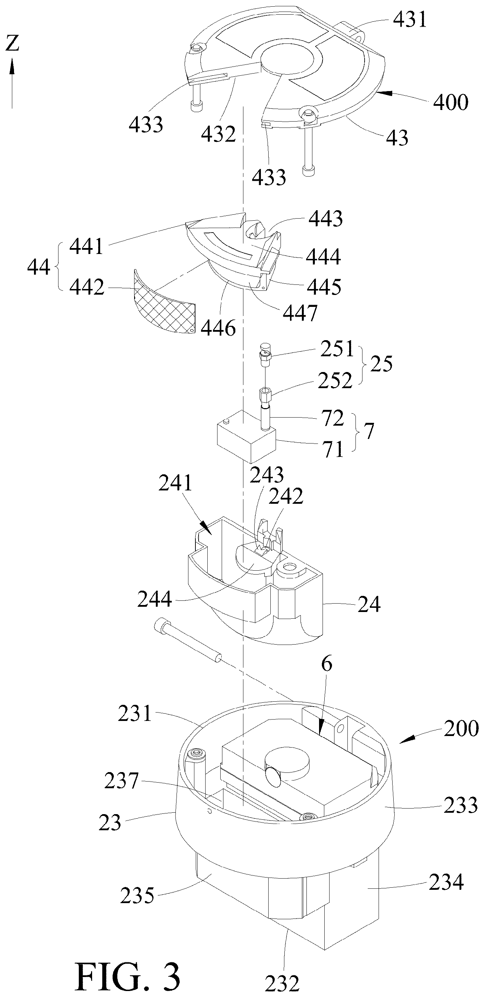

With reference to FIGS. 3 to 5, the water collecting box 24 is accommodated in the box accommodation chamber 237 and has an upper portion disposed in the circular surrounding portion 233. In the embodiment, the water collecting box 24 is removably disposed in the box accommodation chamber 237 so as to be removed from the barrel 23 for cleaning.

The water collecting box 24 is formed with a water collecting chamber 241, a mounting hole 242, a positioning block 243, a slope surface 244 and a translucent window portion 245. The water collecting chamber 241 is located between the upper open end 231 and the lower closed end 232, and is separated from the power accommodation chamber 236 so as to prevent moisture from entering the power accommodation chamber 236.

With reference to FIGS. 3, 4 and 6, in the embodiment, the water collecting chamber 241 is divided into a left space 246 located at the surrounding portion 233, and a right space 247 located at the surrounding portion 233 and the box accommodation chamber 237. The mounting hole 242 is located at an upper side of the right space 247 and is in spatial communication with the water collecting chamber 241. The positioning block 243 is disposed adjacent to the mounting hole 242 and has an upper inclined surface. The slope surface 244 is disposed adjacent to the positioning block 243 at a side opposite to the mounting hole 242 and is inclined downwardly toward the water collecting chamber 241. The translucent window portion 245 is located at an upper side of the water collecting box 24. In this embodiment, the window portion 245 includes a U-shaped block disposed at a side of the mounting hole 242 opposite to the positioning block 243, and a translucent sheet mounted between the U-shaped block and the electronic element unit 6.

With reference to FIGS. 2, 3 and 5, the lid assembly 400 is disposed on and covers the upper open end 231 of the barrel 23 to shield and conceal the water collecting chamber 241. In some embodiments, the lid assembly 400 has a lid 43 which is pivotably connected with an upper periphery of the barrel 23, and a water deflecting seat 44 which is disposed on the lid 43. In this embodiment, the lid 43 has a pivot portion 431 which is pivotably connected with the surrounding portion 233, and a notch 432 which has a fan shape diametrically opposite to the pivot portion 431.

The water deflecting seat 44 is matingly secured in the notch 432, and has a lower portion inserted into the water collecting chamber 241. The water deflecting seat 44 includes a seat body 441 and a filtering member 442 removably mounted on the seat body 441. The seat body 441 has a water conducting hole 443 formed upwardly of the water collecting chamber 241 and in fluid communication with the mounting hole 242 of the water collecting box 24 to conduct water from outside to the water collecting chamber 241, a water deflecting recess portion 444 adjacent to and in spatial communication with the water conducting hole 443 and disposed below the ground surface 9 (see FIG. 6), and a hollow portion 445 disposed below the water conducting hole 443. The water conducting hole 443 is located below the ground surface 9 for water to flow therethrough. The water conducting hole 443 is located above the water collecting chamber 241 and in spatial communication with the water collecting chamber 241. The water conducting hole 443 has a semi-oval shape, and is greater than the mounting hole 242 in area. The water deflecting recess portion 444 extends and is inclined downwardly from an outer periphery of the water deflecting seat 44 toward the water conducting hole 443.

With reference to FIGS. 3 and 6, the hollow portion 445 has a lateral opening 446 formed adjacent to the outer periphery of the water deflecting seat 44 and downstream of the water conducting hole 443 and upstream of the water collecting chamber 241, and a water flowing tilted surface 447 formed below the water conducting hole 443 and inclined downwardly toward the water collecting chamber 241. The lateral opening 446 is located at a side of the tilted surface 447 opposite to the water conducting hole 443, and extends in the up-down direction (Z). The tilted surface 447 is engaged with the slope surface 244 and lower than the slope surface 244.

The filtering member 442 is disposed between the water conducting hole 443 and the water collecting chamber 241. Specifically, the filtering member 442 is interposed between the lateral opening 446 and the water collecting chamber 241 and is disposed adjacent to the lateral opening 446. In some embodiments, the filtering member 442 is in the form of a filter mesh and removably cover the lateral opening 446.

With reference to FIGS. 3, 6 and 7, the water ejecting assembly 25 has an upright nozzle 251 which is mounted in the mounting hole 242 of the water collecting box 24 and extends uprightly in the water conducting hole 443, and a connecting tube 252 which is connected with a lower end of the nozzle 251 and extends downwardly. The nozzle 251 has a nozzle hole 253 which exposes from the seat body 441, and an ejecting surface 254 above the nozzle hole 253. In this embodiment, the ejecting surface 254 is arcuate and faces laterally. The connecting tube 252 is in fluid communication with the nozzle hole 253. The water ejecting assembly 25 is mounted on the water collecting box 24 and is positioned next to the positioning block 243.

Referring to FIG. 6, with the water deflecting recess portion 444 inclined downwardly and below the ground 9, water from the outside, such as rainwater, may flow smoothly along the water deflecting recess portion 444 toward the water conducting hole 443. Subsequently, most of the water may fall on the slope surface 244 and some of the water may flow along the upper inclined surface of the positioning block 243 and over the slope surface 244. Finally, the water may flow into the water collecting chamber 241 through the filtering member 442 to prevent foreign objects, such as mud, leaves, rocks, from entering the water collecting chamber 241. In other embodiments, the positioning block 243 may be omitted.

With the filtering member 442 being disposed at the lateral opening 446, the foreign objects blocked by the filtering member 442 may be accumulated at a bottom portion of the lateral opening 446 so as to keep the lateral opening 446 open and to keep water flowing into the water collecting chamber 241.

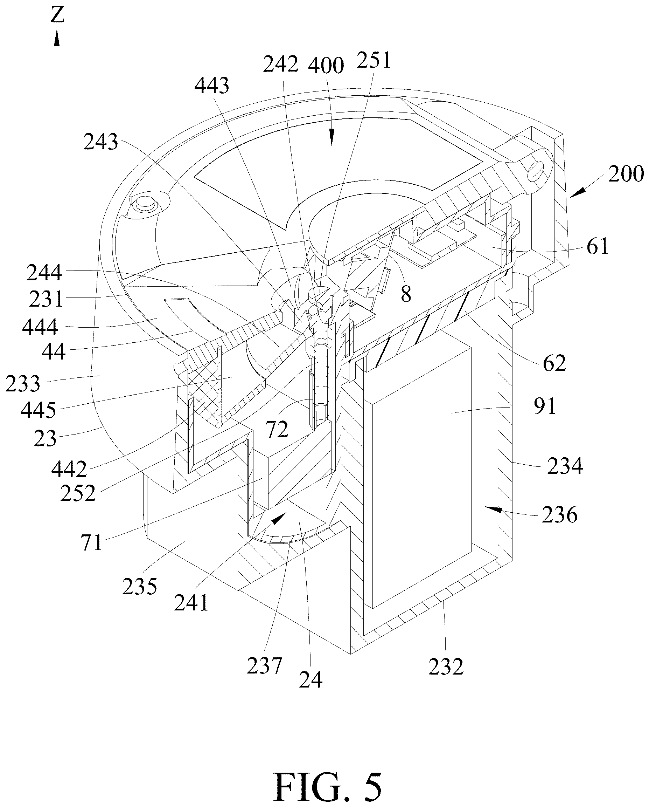

With reference to FIGS. 5 and 6, the electronic element unit 6 is mounted on the housing barrel unit 200, and includes a module container 61 disposed within the surrounding portion 233, a waterproof member 62 disposed between the module container 61 and the power accommodation chamber 236, and an imaging module 8 disposed within the module container 61 and oriented toward the window portion 245. The module container 61 is located above the power accommodation chamber 236. The imaging module 8 and other electronic components are disposed within the module container 61 for waterproofing purposes. The electric power unit 91 may supply power to the electronic element unit 6. The waterproof member 62 is in the form of a rubber cover to further keep the power accommodation chamber 236 dry so as to keep the electric power unit 91 away from moisture.

In this embodiment, the imaging module 8 may capture the image of license plates of vehicles, and has a lens 81 oriented toward the window portion 245. In other embodiments, the imaging module 8 may be a projector or other optical equipment.

With reference to FIGS. 3, 4 and 6, the automatic draining unit 7 is mounted on the housing barrel unit 200, and is in fluid communication with the nozzle 251 to automatically expel water from the water collecting chamber 241. The automatic draining unit 7 includes a water expelling driver 71 which is driven by the electric power unit 91, and a draining pipe 72 which extends in the up-down direction (Z) to be connected with the connecting tube 252 of the water ejecting assembly 25. The water expelling driver 71 may be a water pump, a submersible pump, etc. The draining pipe 72 is in fluid communication with the water expelling driver 71 and is connected with the connecting tube 252 to be in fluid communication with the nozzle hole 253. In other embodiments, the automatic draining unit 7 further includes a water level sensor and controller (not shown) which detects water level in the water collecting chamber 241 and controls actuation of the water expelling driver 71.

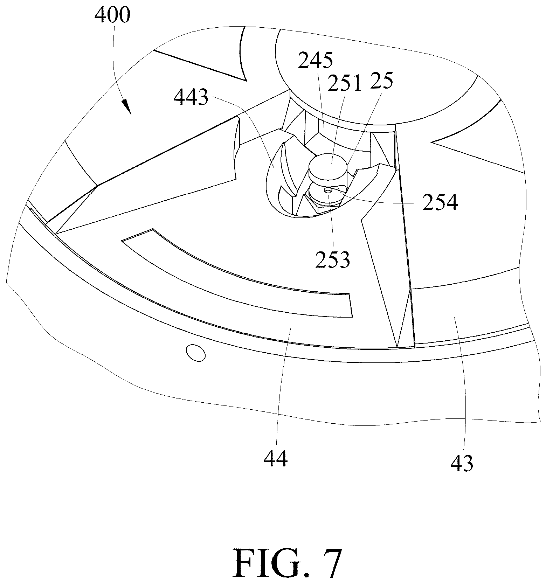

Water on the ground 9 may flow along the water deflecting recess portion 444 and into the water collecting chamber 241, or may seep into the water collecting chamber 241 through small gaps between the component parts. Through the activation of the water expelling driver 71 by electric power, water in the chamber 241 is automatically expelled through the draining pipe 72 and the water ejecting assembly 25. Thus, water is not accumulated in the front of the window portion 245 so that the imaging module 8 may operate correctly to capture images with the lens 81. Specifically, through the automatic expelling of water, water may be discharged quickly from the nozzle hole 253 of the nozzle 251 (see FIG. 7) and be expelled to a place far away from the ejecting surface 254 (see FIG. 6).

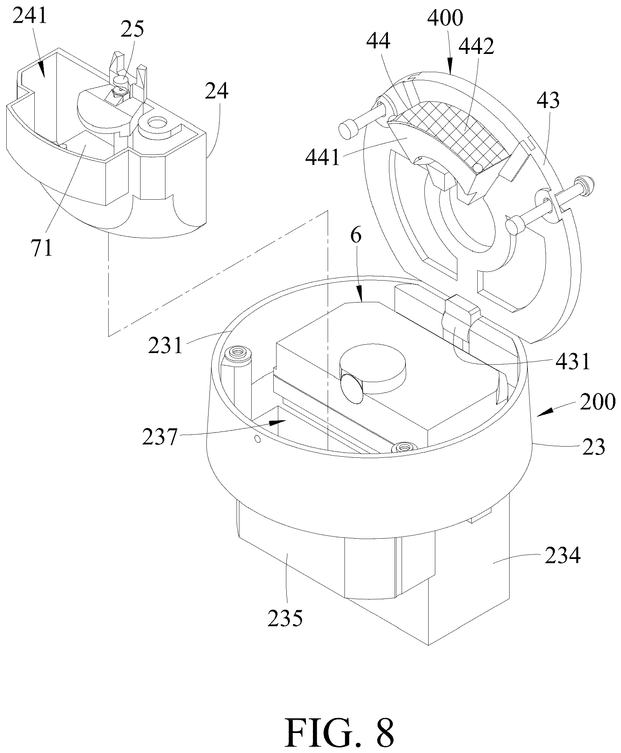

With reference to FIG. 2 and FIG. 8, in some embodiments, the lid assembly 400 is disposed on the upper open end 231 and movable relative to the barrel 23 between a closed position (see FIG. 2), where the lid assembly 400 covers and closes the upper open end 231, and an open position (see FIG. 8), where the lid assembly 400 is uncovered from the upper open end 231. Referring to FIG. 8, when the lid assembly 400 is in the open position, the lid 43 is turned about the pivot portion 431 to open the upper open end 231. At this stage, the water collecting box 24 may be removed from the barrel 23 for removal of foreign objects from the water collecting box 24. Furthermore, the water expelling driver 71 or the water ejecting assembly 25 are removable from the water collecting box 24 for cleaning or maintenance. The filtering member 442 is removable from the seat body 441 for cleaning or replacement.

In various embodiments, the lid 43 is fastened to the barrel 23 by screws without the pivot portion 431. Thus, when the barrel housing unit 200 is embedded in the ground 9, the lid assembly 400 may be unfastened and removed from the barrel 23 by loosening the screws for cleaning the water collecting box 24 and the filtering member 442.

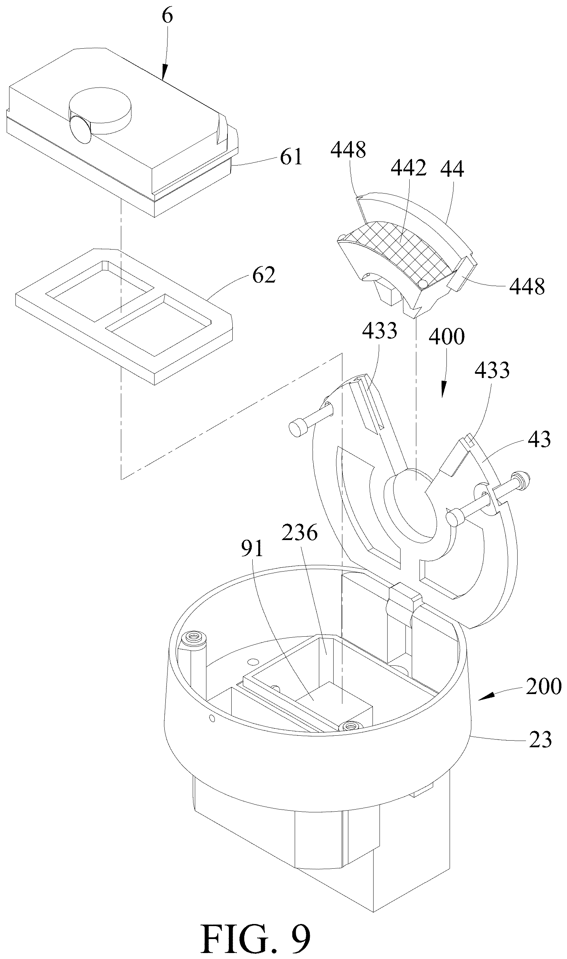

Referring to FIG. 9, when it is desired to replace the electric power unit 91, the lid assembly 400 is moved to the open position, and the module box 61 and the waterproof member 62 are removed from the barrel 23 so as to permit removal of the electric power unit 91.

With reference to FIG. 3 and FIG. 9, in some embodiments, the water deflecting seat 44 is removably mounted on the lid 43. Specifically, the lid 43 has two guide slots 433 formed in spatial communication with the notch 432 and extending radially. The water deflecting seat 44 has two keys 448 which are respectively and slidably engaged in the guide slots 433 such that the water deflecting seat 44 is slidably connected with the lid 43 to be removed from the lid 43, which facilitates cleaning of the water deflecting seat 44 or replacement of the filtering member 442. Alternatively, the water deflecting seat 44 may be integrally formed with the lid 43.

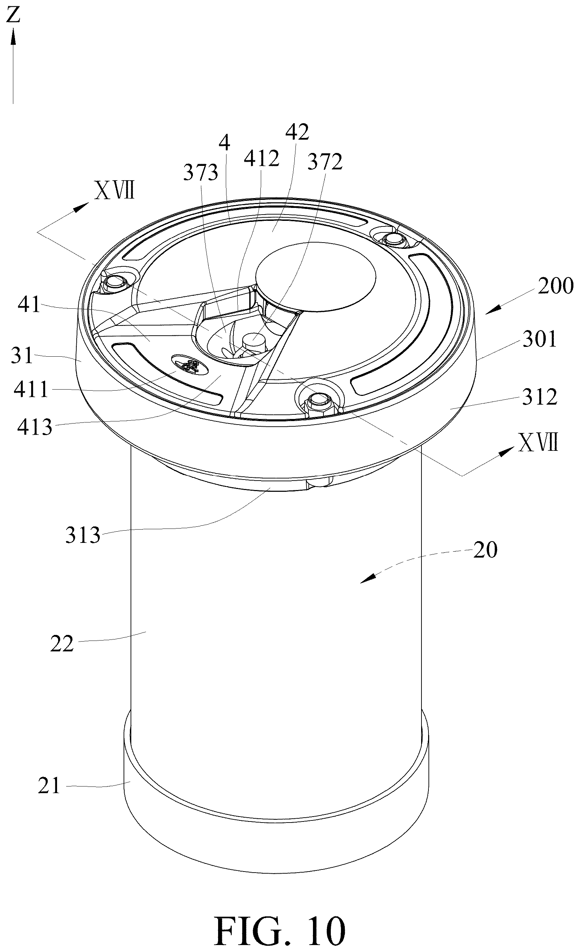

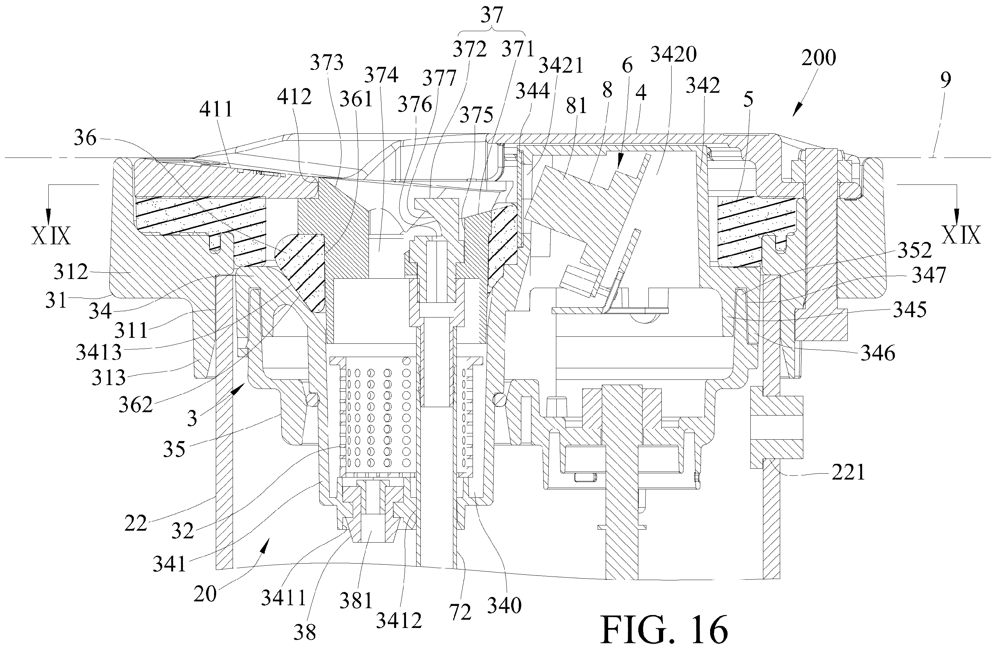

With reference to FIGS. 10 to 12, in another embodiment, the ground embedded imaging device is adapted to be embedded in the ground 9 (see FIG. 16) for capturing license plates of vehicles travelling over the ground 9. The ground embedded imaging device of the embodiment is adapted to be used with an external electric power unit. The ground embedded imaging device includes a barrel housing unit 200, an electronic element unit 6 and an automatic draining unit 7.

The barrel housing unit 200 includes a bottom seat 21, a barrel 22, an upper seat assembly 301 and a lid assembly 4.

The barrel 22 is secured on the bottom seat 21, extends in the up-down direction (Z) and surrounds and defines a water collecting chamber 20 opened upwardly. The barrel 22 is made of a metal, an alloy, a plastic or other materials, and has a wire hole 221 extending therethrough from the water collecting chamber 20 for a power cord (not shown) to extend through the hole 221. In some embodiments, the barrel 22 may be formed by a cavity in the ground 9 so that the bottom seat 21 is omitted.

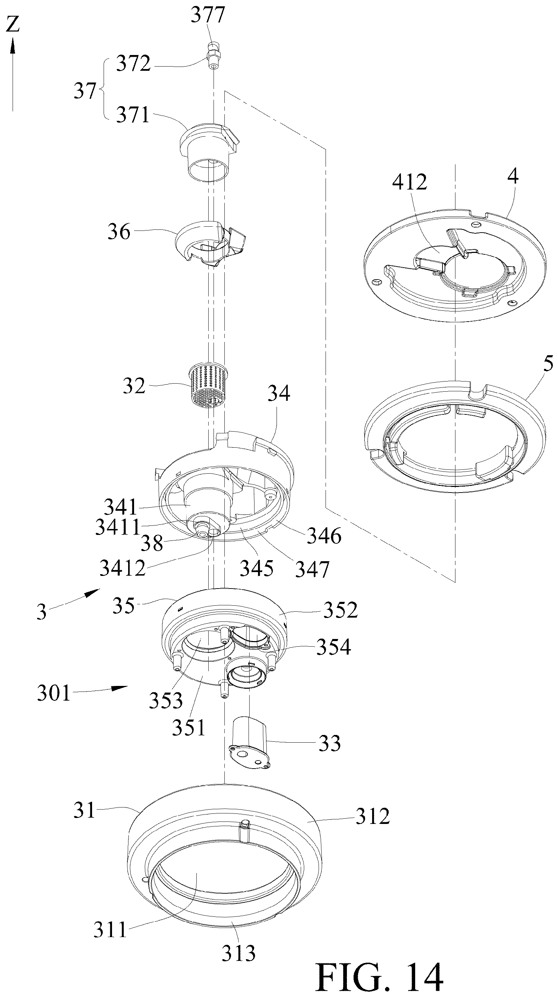

With reference to FIGS. 10, 12 and 13, the upper seat assembly 301 is disposed at an upper end of the barrel 22 to substantially shield and cover the water collecting chamber 20. The upper seat assembly 301 has an outer cylinder 31, an inner cylinder 3 which is mounted on the upper end of the barrel 22 and within the outer cylinder 31, a filtering member 32 which is mounted within the inner cylinder 3, and a junction box 33 which is mounted within the inner cylinder 3. The outer cylinder 31 surrounds and defines an accommodation hole 311. In some embodiments, the upper end of the outer cylinder 31 is flush with the ground 9. In this embodiment, the outer cylinder 31 is made of an aluminum alloy, and has an outer cylinder body 312 which is greater than the barrel 22 in diameter, and a lower flange 313 (see FIG. 14) which extends downwardly from the outer cylinder body 312 and surrounds the barrel 22.

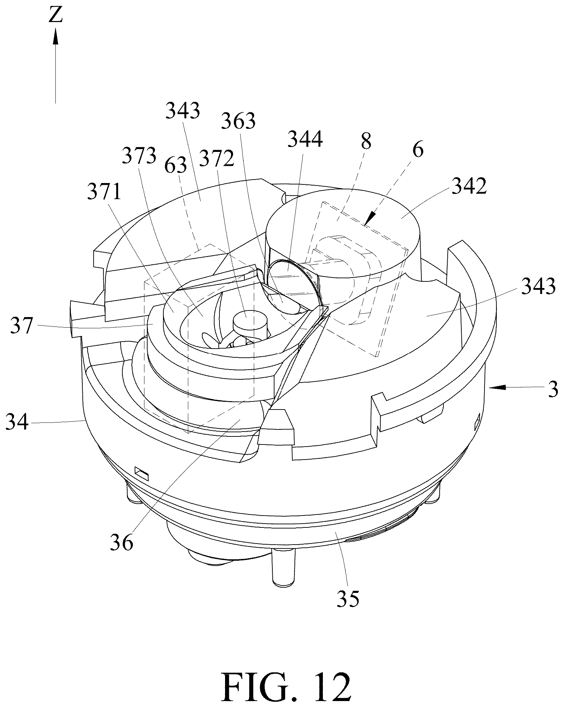

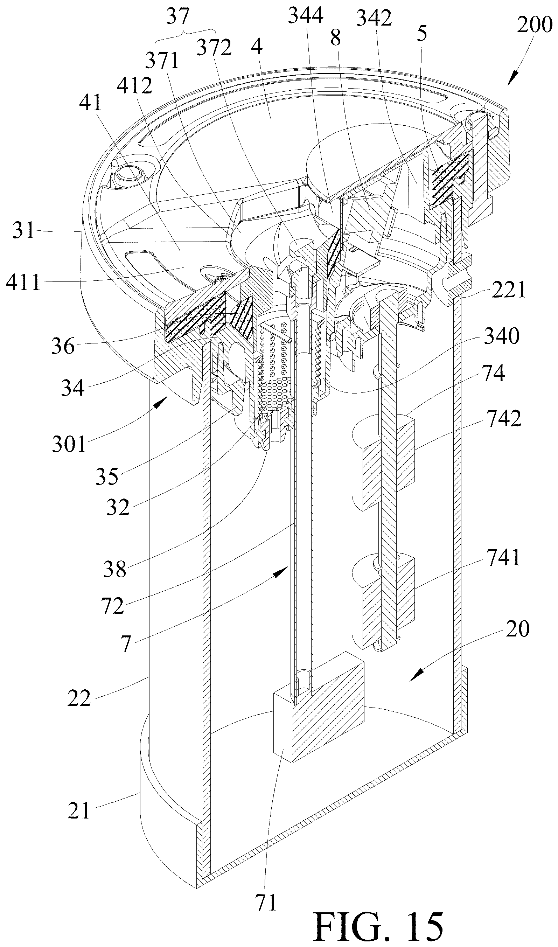

With reference to FIGS. 12, 14, 15 and 16, the inner cylinder 3 is inserted into the accommodation hole 311 of the outer cylinder 31. The inner cylinder 3 has an inner cylinder body 34 which is in snap-fit engagement with the outer cylinder body 312, an inner base seat 35 which is in snap-fit engagement with the inner cylinder body 34 in the up-down direction (Z), an abutting pad 36 which abuts against the inner cylinder body 34 in the up-down direction (Z), a water ejecting assembly 37 which is inserted into and retained to the abutting pad 36 in the up-down direction (Z), and a water entering valve 38 which is removably mounted on the inner cylinder body 34.

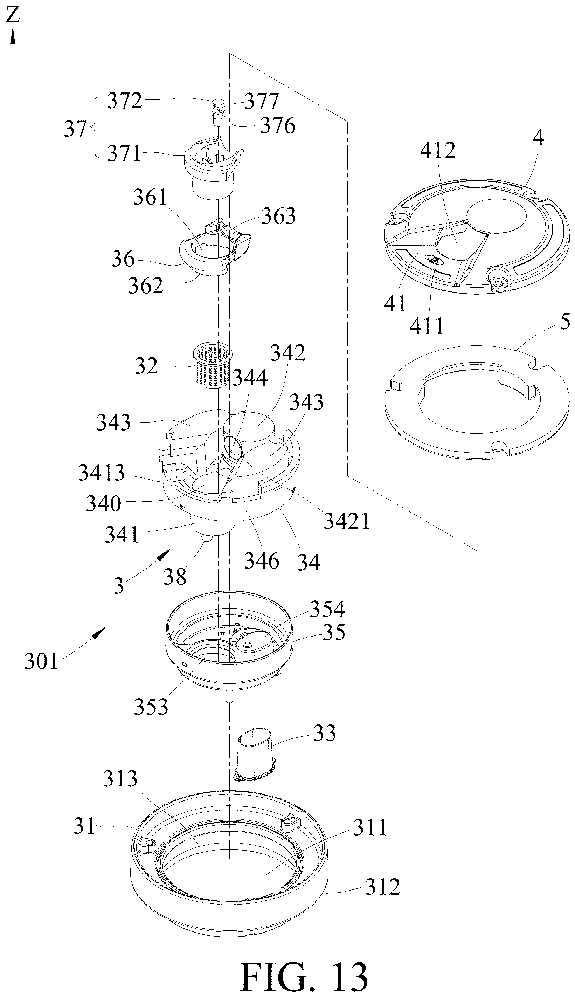

With reference to FIGS. 13, 14, 16 and 17, the inner cylinder body 34 has a sink portion 341 recessed downwardly, a translucent window portion 342 protruding upwardly, two raised portions 343 angularly spaced apart from each other, a translucent sheet 344 disposed on the window portion 342, an inner peripheral wall 345 surrounding the sink portion 341 and the window portion 342, an outer peripheral wall 346 surrounding the inner peripheral wall 345, and a surrounding slot 347 formed between the inner and outer peripheral walls 345, 346. The barrel 22 is inserted into the accommodation hole 311 from the lower flange 313 such that the upper end of the barrel 22 is engaged between the lower flange 313 and the outer peripheral wall 346 of the inner cylinder body 34.

The sink portion 341 surrounds and defines a tank 340 in spatial communication with the water collecting chamber 20. The sink portion 341 has a water entering hole 3411 and an open hole 3412 in spatial communication with the tank 340 and the water collecting chamber 20, and spaced apart from each other, and an inclined arcuate surface 3413 spreading and formed at the upper side of the tank 340, and having a fan shape. The window portion 342 surrounds and defines a compartment 3420, and has a through hole 3421 in spatial communication with the compartment 3420 and adjacent to but higher than the tank 340. Most part of the through hole 3421 is lower than the ground 9. Each raised portion 343 projects upwardly and is hollow. The translucent sheet 344 is mounted at the through hole 3421 and is made of a translucent and waterproof glass material.

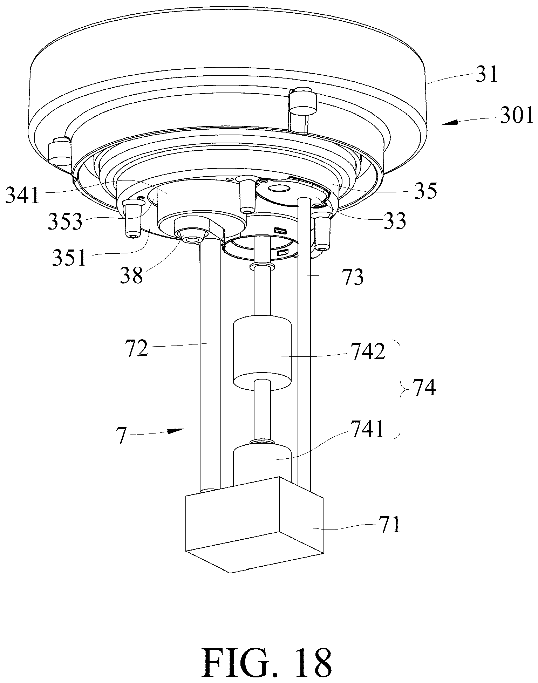

With reference to FIGS. 14, 17 and 18, the inner base seat 35 has a circular base wall 351 and a surrounding wall 352 surrounding the base wall 351 and engaged in the surrounding slot 347 of the inner cylinder body 34. The base wall 351 has a mounting slot 353 for the sink portion 341 of the inner cylinder body 34 to extend therethrough, and a concaved portion 354 inserted into one raised portion 343 of the inner cylinder body 34 for accommodating the junction box 33.

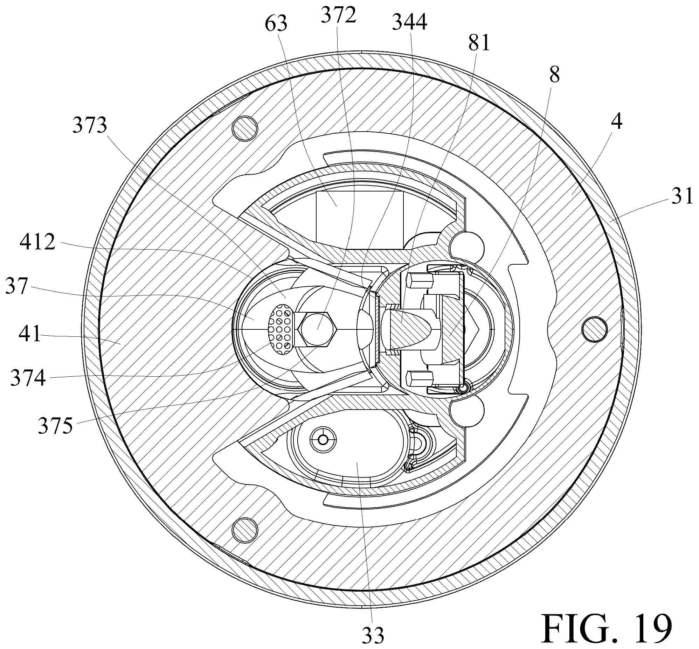

With reference to FIGS. 12, 13, 16 and 19, the abutting pad 36 is made of a rubber material, is mounted on the sink portion 341 of the inner cylinder body 34, and abuts against the inclined arcuate surface 3413. The abutting pad 36 has a through slot 361 in spatial communication with the tank 340, a taper surface 362 in abutting engagement with the inclined arcuate surface 3413, and a water dropping surface 362 opposite to the taper surface 362. The water dropping surface 362 is adjacent to the translucent sheet 344. With the inclined water dropping surface 362, water spattered over the translucent sheet 344 is conducted toward the through slot 361.

The water ejecting assembly 37 is mounted in the through slot 361 of the abutting pad 36 and inserted into the sink portion 341 of the inner cylinder body 34. The water ejecting assembly 37 is in abutting engagement with the abutting pad 36, and has a seat body 371 and a nozzle 372 mounted on the seat body 371 in the up-down direction (Z). The seat body 371 has a fan shape to be fittingly engaged with the abutting pad 36, and has a concaved surface 373, a water entrance hole 374 extending downwardly from the concaved surface 373 and substantially registered with the water entering hole 3411 of the inner cylinder body 34, and a water discharging hole 375 formed adjacent to the water entrance hole 374 and extending downwardly from the concaved surface 373 to be registered with the open hole 3412 of the inner cylinder body 34. In this embodiment, an upper part of the water entrance hole 374 is connected with an upper part of the water discharging hole 375 and is opened upwardly. The water entrance hole 374 and the water discharging hole 375 are in spatial communication with the tank 340 of the sink portion 341. The nozzle 372 is retained in the water discharging hole 375, and has a nozzle hole 376 which is in spatial communication with the tank 340 and the outside, and an ejecting surface 377 which is above the nozzle hole 376 and the water discharging hole 375. In this embodiment, the ejecting surface 377 is arcuate and faces laterally.

The water entering valve 38 is removably mounted in the water entering hole 3411 of the inner cylinder body 34, and has a valve seat 381 which is in spatial communication with the tank 340 and the water collecting chamber 20.

The filtering member 32 is mounted in the tank 340 of the inner cylinder body 34. In this embodiment, the filtering member 32 is a cylinder, is made of a stainless steel material, and is provided with mesh holes. The water entering valve 38 is disposed below the filtering member 32 such that foreign objects are blocked by the filtering member 32 to be prevented from passing the water entering valve 38. The filtering member 32 is removable from the inner cylinder body 34 for cleaning or replacement.

With reference to FIGS. 10, 11, 15 and 16, the lid assembly 4 is disposed above the water collecting chamber 20 and is fastened to the upper side of the outer cylinder 31 by screws. The lid assembly 4 has a water deflecting area 41 which has a fan shape for receiving water, and a cover area 42 which is higher than the water deflecting area 41. The water deflecting area 41 has a water deflecting recess portion 411 below the ground surface 9, and a water conducting hole 412 in spatial communication with the water deflecting recess portion 411. The water deflecting recess portion 411 has a deflecting slope 413 which is inclined downwardly from the outer periphery of the lid assembly 4. The water conducting hole 412 is registered with the nozzle 372, and a wall defining the water conducting hole 412 is in fitting engagement with the concaved surface 373 of the seat body 37. Specifically, the nozzle 372 is retained in the water discharging hole 375 and kept uprightly in the water conducting hole 412. Hence, the water conducting hole 412, the water entrance hole 374, the water discharging hole 375, the tank 340, and the water entering hole 3411 are in spatial communication with one another. Water from the outside or rainwater flows from the deflecting slope 413 of the water deflecting recess portion 444, flows through the water conducting hole 412 to be filtered by the filtering member 32 disposed between the water conducting hole 412 and the water collecting chamber 20, and is collected in the water collecting chamber 20 through the water entering valve 38 mounted in the water entering hole 3411.

In the embodiment, a variety of water entering valves 38 with different valve port diameters may be selected to be mounted in the water entering hole 3411 to adjust the amount of water entering the water collecting chamber 20.

In this embodiment, a waterproof rubber ring 5 is interposed between the lid assembly 4 and the upper seat assembly 301.

With reference to FIGS. 12, 16 and 17, the electronic element unit 6 is mounted on the housing barrel unit 200, and includes a control board 63 mounted within the upper seat assembly 301, and an imaging module 8 disposed adjacent to the window portion 342. The control board 63 is mounted on the base wall 351 of the inner base seat 35 and within the other raised portion 343. Specifically, the imaging module 8 is disposed within the window portion 342 and oriented toward the translucent sheet 344. In this embodiment, the imaging module 8 is a video camera and includes a lens 81 oriented toward the translucent sheet 344 and lower than the ground surface 9. The imaging module 8 is operated to capture images of license plates of vehicles with the lens 81. In other various embodiments, the imaging module 8 may be a projector or other optical equipment.

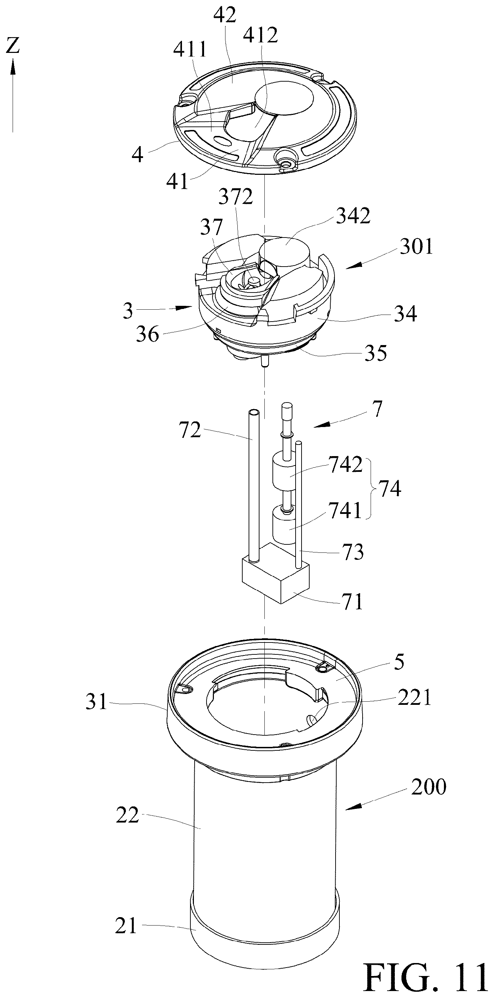

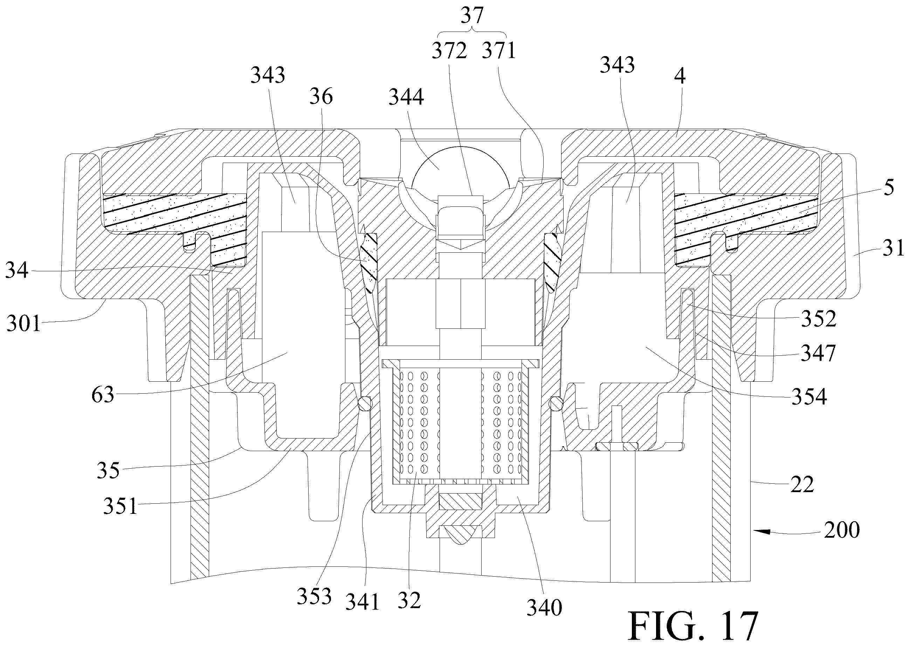

With reference to FIGS. 11, 15, 16 and 18, the automatic draining unit 7 is mounted on the barrel 22 and the upper seat assembly 301 to automatically expel water from the water collecting chamber 20. The automatic draining unit 7 includes a water expelling driver 71 which is accommodated in the water collecting chamber 20 and is electronically connected with the control board 63 (see FIG. 17), a draining pipe 72 which is in fluid communication with the water expelling driver 71 and extends in the up-down direction (Z), a wire connecting tube 73 which extends in the up-down direction (Z) to be connected with the water expelling driver 71 and the junction box 33, and a water level sensor and controller 74 which is accommodated in the water collecting chamber 20. The water expelling driver 71 may be a water pump, a submersible pump, etc. The draining pipe 72 has an upper end extending through the filtering member 32 and connected with the nozzle 372 so as to be in fluid communication with the nozzle hole 376. The nozzle hole 376 has an inner diameter smaller than that of the draining pipe 72. The water level sensor and controller 74 detects water level in the water collecting chamber 20 and is in signal connection with the water expelling driver 71 so as to control actuation of the water expelling driver 71. In some embodiments, the water level sensor and controller 74 may control the water expelling driver 71 through the control board 63. Since the electronic control method is of a known art with various known types, a detailed description thereof is omitted. In this embodiment, the water level sensor and controller 74 has a low water level sensor 741 and a high water level sensor 742 higher than the low water level sensor 741.

The ground embedded imaging device of this embodiment is adapted to be used with an external electric power unit that has a power cord extending through the wire hole 221 to supply power to the junction box 33 and the control board 63. The control board 63 is electrically connected with the water expelling driver 71 and the water level sensor and controller 74 for supplying power. The junction box 33 is coated with a waterproof adhesive. The wire hole 221 may be closed when a battery power is used.

When water in the water collecting chamber 20 is higher than the high water level sensor 742, the water expelling driver 71 is actuated to draw the water to the upper end of the draining pipe 72 and expel the water through the nozzle hole 376. Since the inner diameter of the nozzle hole 376 is smaller than that of the draining pipe 72, the speed of the water flowing through the nozzle hole 376 is increased to discharge (i.e., ejecting) the water to a place far away. When the water in the water collecting chamber 20 is lower than the low water level sensor 741, the water expelling driver 71 is stopped from discharging water.

The water entering valve 38 having a relatively large port diameter may allow a large amount of water to enter the water collecting chamber 20 so water may flow smoothly into the water collecting chamber 20. The water entering valve 38 having a relatively small port diameter may allow a small amount of water to enter the water collecting chamber 20 for prolonging the service life of the water expelling driver 71. Thus, the water entering valves 38 with different valve port diameters may be selected according to the requirements.

In this embodiment, the water in the water collecting chamber 20 is automatically expelled by actuating the water expelling driver 71 and through the detection of the water level sensor and controller 74. Alternatively, the water level sensor and controller 74 may be integrally formed with the water expelling driver 71. Alternatively, the water level sensor and controller 74 may only have a water level sensor.

In the embodiment, the through hole 3421 of the window portion 342 is adjacent to and oriented toward the water ejecting assembly 37, and the nozzle 372 is located under the water conducting hole 412. In other embodiments, the through hole 3421 of the window portion 342 may be remote from and opposite to the water ejecting assembly 37. The nozzle 372 and the water conducting hole 412 may be horizontally spaced apart from each other. The positional relationship among the window portion 342, the water conducting hole 412, and the water ejecting assembly 37 may be varied as required.

The through hole 3421 of the inner cylinder body 34 and the lens 81 are mostly below the ground 9 such that the water on the ground 9 flows downwardly along the water deflecting recess portion 411 and into the water collecting chamber 20, and may seep into the water collecting chamber 20 through small gaps between the component parts. With the automatic draining unit 7 automatically expelling water in the water collecting chamber 20, water is not accumulated in the front of the lens 81 so that the imaging module 8 may operate correctly to capture images with the lens 81.

As illustrated, with the water deflecting recess portion 444, 411 in spatial communication with the water conducting hole 443, 412 and disposed below the ground surface 9, water on the ground surface 9 is guided and smoothly flows into the water collecting chamber 241, 20. With the water expelling driver 71 automatically actuated to expel the water from the water collecting chamber 241, 20, water is prevented from accumulating around the lens 81, 372 so that the imaging module 8 may operate correctly to capture or project images with the lens 81, 372.

In the description above, for the purposes of explanation, numerous specific details have been set forth in order to provide a thorough understanding of the embodiments. It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects; such does not mean that every one of these features needs to be practiced with the presence of all the other features. In other words, in any described embodiment, when implementation of one or more features or specific details does not affect implementation of another one or more features or specific details, said one or more features may be singled out and practiced alone without said another one or more features or specific details. It should be further noted that one or more features or specific details from one embodiment may be practiced together with one or more features or specific details from another embodiment, where appropriate, in the practice of the disclosure.

## Claims

1. A ground embedded imaging device, **characterized by** comprising:
a barrel housing unit (200) extending in an up-down direction, and having a water collecting chamber (241, 20), a translucent window portion (245, 342) disposed at an upper end of said barrel housing unit (200), a water conducting hole (443, 412) formed upwardly of said water collecting chamber (241, 20) to conduct water from outside to said water collecting chamber (241, 20), and a water deflecting recess portion (444, 411) in spatial communication with said water conducting hole (443, 412) and disposed below a ground (9);
an electronic element unit (6) mounted on said housing barrel unit (200), and including an imaging module (8) which is oriented toward said window portion (245, 342); and
an automatic draining unit (7) mounted on said housing barrel unit (200), and including a water expelling driver (71) which is driven by electric power and is actuated to expel water from said water collecting chamber (241, 20).

2. The ground embedded imaging device as claimed in claim 1, wherein said barrel housing unit (200) has a filtering member (442, 32) which is disposed between said water conducting hole (443, 412) and said water collecting chamber (241, 20).

3. The ground embedded imaging device as claimed in claim 1, wherein said barrel housing unit (200) includes a lid assembly (400, 4) which is disposed upwardly of said water collecting chamber (241, 20), said water deflecting recess portion (444, 411) extending and being inclined downwardly from an outer periphery of said lid assembly (400, 4) toward said water conducting hole (443, 412).

4. The ground embedded imaging device as claimed in claim 3, wherein said lid assembly (400, 4) has a lateral opening (446) which is formed adjacent to said outer periphery and downstream of said water conducting hole (443) and upstream of said water collecting chamber (241), and a filtering member (442) which is interposed between said lateral opening (446) and said water collecting chamber (241) and disposed adjacent to said lateral opening (446).

5. The ground embedded imaging device as claimed in claim 4, wherein said lid assembly (400) includes a water deflecting seat (44), said water deflecting seat (44) having a seat body (441) which is formed with said water conducting hole (443), said water deflecting recess portion (444) and said lateral opening (446), said filtering member (442) being removably mounted on said seat body (441) to cover said lateral opening (446).

6. The ground embedded imaging device as claimed in claim 3, wherein said barrel housing unit (200) further includes a water ejecting assembly (25, 37), said water ejecting assembly (25, 37) having an upright nozzle (251, 372) which is inserted into said water conducting hole (443, 412) and which is in fluid communication with said automatic draining unit (7), said water expelling driver (71) being actuated to expel water from said water collecting chamber (241, 20) through said nozzle (251, 372).

7. The ground embedded imaging device as claimed in claim 6, wherein said automatic draining unit (7) further includes a draining pipe (72) which is in fluid communication with said water expelling driver (71) and extends in the up-down direction (Z), said upright nozzle (251, 372) having a nozzle hole (253, 376) which is in fluid communication with said draining pipe (72) so as to expel water from said water collecting chamber (241, 20) through said draining pipe (72) and said nozzle hole (253, 376).

8. The ground embedded imaging device as claimed in claim 3, wherein said barrel housing unit (200) further includes a barrel (23, 22) which extends in the up-down direction (Z) and has an upper open end (231) and a lower closed end (232), said water collecting chamber (241, 20) being formed between said upper open end (231) and said lower closed end (232), said lid assembly (400, 4) being disposed on said upper open end (231) and movable relative to said barrel (23, 22) between a closed position where said lid assembly (400, 4) covers and closes said upper open end (231), and an open position where said lid assembly (400, 4) is uncovered from said upper open end (231).

9. The ground embedded imaging device as claimed in claim 1, wherein said barrel housing unit (200) includes a barrel (23) and a water collecting box (24) which is removably mounted in said barrel (23) and is formed with said water collecting chamber (241) therein.

10. The ground embedded imaging device as claimed in claim 1, wherein said barrel housing unit (200) further has a power accommodation chamber (236) which is separated from said water collecting chamber (241) for accommodating an electric power unit (91) supplying the electric power.

11. The ground embedded imaging device as claimed in claim 3, wherein said lid assembly (400) has a lid (43) which is pivotably connected with an upper periphery of said barrel housing unit (200), and a water deflecting seat (44) which is disposed on said lid (43) and is formed with said water conducting hole (443) and said water deflecting recess portion (444).

12. The ground embedded imaging device as claimed in claim 11, wherein said water deflecting seat (44) is slidably connected with said lid (43) to be removed from said lid (43).

13. The ground embedded imaging device as claimed in claim 1, wherein said automatic draining unit (7) further includes a water level sensor and controller (74) which detects water level in said water collecting chamber (241, 20) and controls actuation of said water expelling driver (71).
